# EUROPEAN PATENT APPLICATION

(11) **EP 1 111 110 A2**
(43) Date of publication of application: **27.06.2001**
(21) Application number: 00311447.7
(22) Date of filing: 20.12.2000
(51) Int. Cl.: D04B 21/04

(54) **Reinforced panel structure**

(30) Priority: 23.12.1999 GB 9930567
(71) Applicant: SCOTT & FYFE LIMITED, Tayport Fife DD6 9DQ Scotland (GB)
(72) Inventor: Phin, David Donald, Dundee DD3 8QQ (GB)
(74) Representative: Boydell, John Christopher

(57) **Abstract**

A reinforced panel structure made by impregnating resin in a knitted fabric and allowing the resin to cure. The fabric comprises first and second spaced layers (1,2) which are interlinked by an intermediate pile layer (3) comprising two sets of ribs (4,5). The ribs (4) comprise monofilament yarns having a relatively high stiffness sufficient to provide a restoring force during impregnation of the fabric with resin. The ribs (5) are made from multifilament yarns, spun yarns or composite yarns, selected for desired properties of the finished fabric and/or for their wetting properties during impregnation.

A method of making a reinforced panel structure is also described, this involving placing the impregnated fabric into a closed mould wherein it can expand, under the influence of the monofilament yarns, to fill the mould and thus produce a finished 3D article corresponding in shape to the interior of the mould.

## Description

This invention relates to a reinforced panel structure and to a method of making such a panel structure. The invention is particularly concerned with panel structures of the type comprising a sheet of fabric which is impregnated during manufacture with a hardenable liquid material. The fabric is a multi-layer knitted structure comprising first and second layers spaced apart by a relatively less dense intermediate layer.

Such a reinforced panel structure is described in EP-B-0339227. In this patent there is described a reinforced panel made of a knitted fabric which is impregnated with a hardenable resin which is subsequently cured and/or hardened to provide a structural component. The knitted fabric comprises first and second parallel spaced layers which are interlinked by ribs made of multi-filament yarn. The characteristics of these ribs is such that, upon impregnation of the fabric by rolling or other means, the fabric is able to recover the spacing between the layers against the natural tendency of the resin to adhere the layers together. To this end, the ribs are appropriately shaped and are made from a particular class of high-stiffness technical yarns. Examples from this particular group of technical yarns include multi-filament yarns made of glass fibre filaments, carbon fibre filaments, aramide fibre filaments and ceramic fibre filaments.

The construction described in EP-B-0339227 is in effect tied to the use of these particular technical yarns since, amongst the available multi-filament yarns, only these have the stiffness required to recover a significant inter-layer spacing during impregnation with resin. However, such yarns are expensive and difficult to process, and may not always provide other required characteristics of the product, either before or after resin impregnation. The present invention seeks to provide a product of the general type described above but in which there can be greater flexibility in the type of yarn used, particularly in the intermediate layer, so that a more appropriate choice of yarn, based perhaps on price or particular required characteristics in the finished product, can be made, rather than having the yarn type primarily dictated by the required characteristics of high-stiffness mentioned above.

According to a first aspect of the invention there is provided a structural panel made of a knitted fabric which is impregnated with a hardenable liquid material which is subsequently cured and/or hardened, said knitted fabric comprising first and second spaced layers which are interlinked by an intermediate pile layer comprising multiple ribs made of yarn, said panel being characterised in that said intermediate pile layer comprises at least some ribs of a first type and at least some ribs of a second type, different to the first type, and in that the ribs of said first type are made from yarns which are sufficiently stiff to provide the fabric with self-recovery characteristics when squeezed.

Preferably the yarns of the first type are monofilament yarns. Examples of such yarns are synthetic filaments such as polypropylene, polyethylene, polyester and polyamide.

The distinction between monofilament yarns, such as proposed above, and multifilament yarns can be somewhat blurred but workers in the art understand the difference between the two. Monofilament yarns are rarely found less than about 0.04 mm in diameter, whilst 0.1 mm diameter is more typical and diameters even up to 3 mm are possible. By contrast a filament used in a multifilament yarn has a diameter typically in the region of about 2 to 25 microns.

The thickness of the monofilament yarn used will depend primarily upon the required thickness of the fabric: for example 0.05 to 0.1 mm thickness might be used for a fabric of 4 or 5 mm thickness, whereas a thicker fabric, for example 20 mm thick, might need monofilaments of 0.2 or 0.25 mm thickness, and a fabric in excess of 20 mm would require an appropriate diameter monofilament. Fabrics of thickness as high as 20 mm are not readily obtainable with the fabric described in the aforementioned EP-B-0339227 because there is a practical limit to the stiffness of the technical yarn used. Generally speaking all of the monofilament yarns will have the same characteristics of material and diameter, but there may be special instances where monofilaments of different materials and/or diameter are used.

The yarns of the second type can be of any suitable material, in particular, any material which will give the required characteristics in the fabric. Preferably the yarns of the second type are multifilament yarns, but they do not need to be of the technical type mentioned above (although they can be), which gives great flexibility in choice of material for the characteristics required. Multifilament yarns are preferred because they are generally more effective in taking up the resin during impregnation and there are some combinations of material which are known to work together particularly well, for example jute and phenolic resin.

The yarns of the second type could also be spun yarns or composite yarns such as core spun yarns, or plied yarns or even technical yarns of the aforementioned special variety.

To illustrate the diversity of possible natural or synthetic yarns which may be used, random examples include jute, cotton, polyester and glass.

Not all the yarns of the second type need to be the same; as with the monofilament yarns, a mixture of materials and diameters can be used to achieve special characteristics.

Thus it will be seen that the ribs linking the two layers comprise yarns either of the first type - high stiffness, preferably monofilament, yarns for self recovery - or of the second type - any other type of yarn, but preferably multifilament or spun yarns having good resin wetting characteristics. The two types of yarn will normally be distributed evenly over the area of the fabric, although special circumstances may dictate other arrangements. The ratio of yarns of the first type to yarns of the second type will depend upon the particular circumstances - a ratio of 1.1 might be typical - and the pattern of yarns as between the first and second types can be varied to suit the requirements either of the fabric, or of the knitting machine used to make the fabric.

It is normally the case that yarn of the second type will be the most desirable to use, since this is likely to have the best wetting characteristics; therefore the general rule might be that the use of yarns of the first type is kept to a minimum consistent with providing an effective and even self restoring effect.

The fabric may be knitted on any suitable knitting machine; for example a double needle bed knitting machine of the Raschel type would be particularly suitable. Such a machine allows the use of separate beams for each of the first and second layers and for the ribs. Many variations are possible but, as an example, in a machine having 5 beams, two of these could be used for each of the layers, and one for the ribs. In connection with the intermediate rib layer, the two different required yarn types can each be supplied from a separate beam, or a single beam could be used, itself fed with different yarns from bobbins or a creel.

The yarns used for the first and second layers may be the same as one of the yarns used for the ribs of the intermediate pile layer, or they may be different. Indeed, according to the characteristics required of the finished product, the first and second layers, and the intermediate pile layers may all be knitted from different yarns.

In order to make the maximum benefit of the stiffness of the yarns of the first type, it is preferred that the ribs linking the first and second layers have a length which is greater than the distance between the layers and that the ribs have a bowed shape. When the fabric is compressed during impregnation with resin, the radius of curvature of the bowed ribs reduces, thus increasing the natural tendency of the ribs to return to their original shape.

Following manufacture of the knitted fabric, the structural panel is produced by impregnating the fabric with a hardenable liquid material such as resin. During this process the fabric is squeezed to ensure that the resin fully impregnates the fabric and the choice of yarns of the first type for at least some of the ribs linking the two layers ensures that, after such squeezing, the fabric will return to substantially its original shape, in particular, the spacing between the layers will be maintained. Since the intermediate pile layer is of a fairly open construction air pockets will be formed which will provide the advantageous strength and insulative properties required of the finished panel.

According to a second aspect of the invention there is provided a method of manufacturing a structural panel made of a knitted fabric comprising first and second spaced layers which are interlinked by an intermediate pile layer comprising multiple ribs of a first type and multiple ribs of a second type, different from the first type, wherein the ribs of the first type are made from yarns which are sufficiently stiff to provide the fabric with self-recovery characteristics when squeezed, said method comprising impregnating the fabric with a hardenable liquid material, placing the fabric in a mould, and holding the fabric in the mould to permit hardening of the liquid material. Preferably the impregnated fabric is squeezed prior to being placed in the mould to ensure full penetration of the fabric by the liquid material, and to remove excess liquid material.

Preferably the mould is of such shape and dimensions that, during its time in the mould, the fabric is selectively constrained and expands, under the influence of the aforementioned ribs of the first type, to substantially fill the mould and thus take up the internal shape of the mould. During this process the monofilament yarns are able to exert considerable force within the mould, thus enabling quite intricate 3D shapes to be moulded with accuracy.

In order that the invention may be better understood, an embodiment thereof will now be described by way of example only and with reference to the accompanying drawings in which:-
Figure 1 is an edge view of a reinforced panel structure made in accordance with the invention; and
Figure 2 is an edge view of the panel of Figure 1 taken in a direction at right angles to the view of Figure 1.

Referring to the drawings, the panel comprises upper and lower parallel knitted layers 1,2 and an intermediate pile layer 3 extending between and separating the layers 1 and 2.

The panel illustrated in the drawings is made from a knitted fabric which has a structure essentially similar to that shown. In order to manufacture the panel the fabric is impregnated with a hardenable resin. Once the resin has hardened, a relatively stiff panel is formed. The panel may be planar, as illustrated, or may be some other shape, as required.

The layers 1 and 2 may or may not be identical, depending upon the characteristics required of the finished product. Variations between the two layers may include different knitting patterns, different sizes of yarn or different types of yarn.

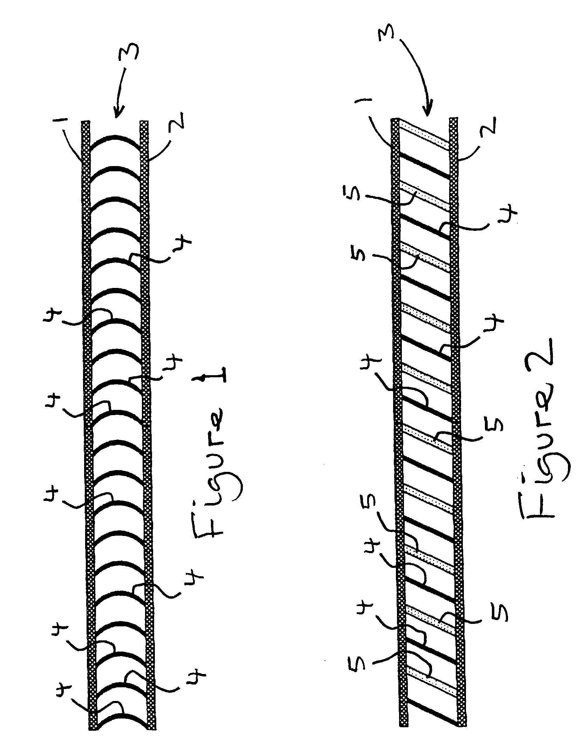

The pile layer 3 comprises two sets of ribs, with the ribs of each set being distributed regularly about the fabric. In the drawings, the two sets of ribs are identified by the reference 4 for the first set, and the reference 5 for the second set (however, only the first set of ribs is visible in Figure 1). The ribs of each set alternate in the X-Y directions shown, giving a 1:1 ratio between the two sets, but other patterns are possible - for example, more of one set than the other. The density of the ribs can also be varied according to the required characteristics of the finished product.

The intermediate layer 3 serves essentially two functions: firstly, in the finished product, the impregnated ribs form pillars maintaining the spacing between the layers 1 and 2; secondly, during impregnation by the resin the intermediate layer needs to be capable of restoring the spacing between layers 1 and 2 against the natural tendency of the resin to hold them together.

To achieve these two functions the two sets of ribs are made of materials having different characteristics. The ribs 4 comprise monofilament yarns made from synthetic materials such as polypropylene, polyethylene, polyester and polyamide. Monofilament yarns have the high stiffness necessary to provide the necessary restoring force during impregnation of the fabric. The ribs 5 are made from multifilament yarns, spun yarns, or composite yarns, typically knitted at about 12 gauge and with a weight of about 1100 dtex. Because the restoring function is taken care of by the ribs 4, the fabric designer can be much more flexible in his choice of yarn to be used for the ribs 5. Multifilament or spun yarns are advantageous because they exhibit a better "wicking" action than monofilament yarns and they therefore make stronger, reinforced resin pillars maintaining the separation between the layers in the finished product. However, prior to impregnation, multifilament and spun yarns are not usually particularly stiff and therefore do not significantly contribute to the restoring force necessary during impregnation.

Thus although, to an extent, both sets of ribs contribute to both of the above-referred to functions, the first function is primarily served by the second set of ribs 5 and the second function by the first set of ribs 4.

Examples of the yarn used for the second set of ribs are natural fibres for example jute and cotton or synthetic yarns such as polyester or glass. The extreme flexibility which is available in the choice of yarn for the ribs 5 enables known advantageous combinations to be used, for example jute with phenolic resin systems.

In order to provide the maximum restoring force, the length of the ribs 4 of the first set, and preferably also the ribs 5 of the second set, are made slightly greater than the distance between the layers 1 and 2. The result of this is that, when seen from the direction corresponding to Figure 1, the ribs take up a slightly bowed shape which improves the force they are able to impart when restoring the shape during impregnation. When seen from the direction corresponding to Figure 2, the ribs extend at an angle from one layer to the other. Typically this angle is approximately 60° with respect to the plane of the panel. Preferably the yarns comprising the ribs are slightly twisted during the knitting process since this has been found to improve the ability of the ribs to maintain their shape. However, this is not a fundamental requirement.

The pattern of ribs may be varied to suit the circumstances of use. In the illustrated embodiment the ribs are arranged in the plane of the panel along two pairs of parallel rows, intersecting at right angles; however different arrangements, including more random arrangements could be used, subject to the ability of the knitting machine to knit the required pattern.

The manufacture of the structural panel of the invention proceeds by way of two basic steps, firstly the knitting of a multilayer fabric and second the impregnation of the fabric with a hardenable resin or similar, followed by the hardening or curing of the resin. The resultant product is a hard, strong, reinforced panel structure which has a variety of uses.

The knitting step is preferably carried out on a double bed knitting machine, for example of the Raschel type, including a plurality of bars. Such machines are well known in the art. Although the whole fabric is knitted as a unitary structure, the yarn for the different parts of the structure may be fed from different bars: each of the upper and lower layers 1,2 preferably requires at least two bars; the intermediate pile layer 3 preferably requires at least one bar. For example, the machine could be set up so that the two different yarns of the pile layer 3 are fed from respective bars.

## Claims

1. A structural panel made of a knitted fabric which is impregnated with a hardenable liquid material which is subsequently cured and/or hardened, said knitted fabric comprising first and second spaced layers which are interlinked by an intermediate pile layer comprising multiple ribs made of yarn, said panel being characterised in that said intermediate pile layer comprises at least some ribs of a first type and at least some ribs of a second type, different to the first type, and in that the ribs of said first type are made from yarns which are sufficiently stiff to provide the fabric with self-recovery characteristics when squeezed.

2. A structural panel according to claim 1 wherein the yarns of the first type are monofilament yarns.

3. A structural panel according to claim 2 wherein the yarns of the first type have a thickness in the range 0.05 to 0.25 mm.

4. A structural panel according to any one of claims 1 to 3 wherein the yarns of the second type are multifilament yarns.

5. A structural panel according to any one of claims 1 to 3 wherein the yarns of the second type are spun yarns, composite yarns, plied yarns or technical yarns.

6. A structural panel as claimed in any one of the preceding claims wherein all of the yarns of the second type are of the same variety.

7. A structural panel as claimed in any one of claims 1 to 5 wherein said second yarns include mixtures of different sizes and/or varieties of yarn.

8. A structural panel as claimed in any one of the preceding claims wherein the yarns of the first type and yarns of the second type are distributed evenly over the area of the fabric.

9. A structural panel as claimed in any one of the preceding claims wherein at least the ribs of the first type have a length which is greater than the distance between the layers, and have a bowed shape.

10. A structural panel as claimed in any one of the preceding claims wherein the yarns which comprise the ribs, at least of the first type, are slightly twisted so that they are torsionally biased in the knitted fabric.

11. A method of manufacturing a structural panel made of a knitted fabric comprising first and second spaced layers which are interlinked by an intermediate pile layer comprising multiple ribs of a first type and multiple ribs of a second type, different from the first type, wherein the ribs of the first type are made from yarns which are sufficiently stiff to provide the fabric with self-recovery characteristics when squeezed, said method comprising impregnating the fabric with a hardenable liquid material, placing the fabric in a mould, and holding the fabric in the mould to permit hardening of the liquid material.

12. A method as claimed in claim 11 wherein, prior to introduction into the mould, the impregnated fabric is squeezed to ring out excess liquid material.

13. A method as claimed in either one of claims 11 or 12 wherein the mould is of such shape and dimensions that, during its time in the mould, the impregnated squeezed fabric is selectively constrained and expands, under the influence of the ribs of the first type, to substantially fill the mould and thus produce a finished structural panel having a 3D shape corresponding to the interior of the mould.

14. A method as claimed in any one of claims 11 to 13 wherein the liquid material is a resin.
